# EUROPEAN PATENT SPECIFICATION

(11) **EP 3 885 663 B1**
(45) Date of publication and mention of the grant of the patent: **22.02.2023**
(21) Application number: 19886516.4
(22) Date of filing: 20.11.2019
(51) Int. Cl.: F24F 11/50, F24F 110/00, G10L 15/00

(54) **AIR CONDITIONING SYSTEM**
KLIMATISIERUNGSSYSTEM
SYSTÈME DE CLIMATISATION

(30) Priority: 22.11.2018 JP 2018219069
(43) Date of publication of application: 29.09.2021
(73) Proprietor: Daikin Industries, Ltd., Osaka-shi, Osaka 530-0001 (JP)
(72) Inventor: OGAWA, Kouhei, Osaka 530-8323 (JP); SUOU, Kiyoyuki, Osaka 530-8323 (JP); NAKAYAMA, Mayuko, Osaka 530-8323 (JP)
(74) Representative: Global IP Europe Patentanwaltskanzlei
(86) International application number: PCT/JP2019/045451
(87) International publication number: WO 2020/105680

(56) References cited:
- WO-A1-2015/029379
- WO-A1-2016/052015
- JP-A- 2009 042 298
- JP-A- 2014 164 522
- JP-A- 2017 010 176
- KR-A- 20180 110 978
- US-A1- 2014 244 769
- US-A1- 2015 053 779
- US-A1- 2016 373 269

## Description

### TECHNICAL FIELD

The present disclosure relates to an air conditioning system including a plurality of air conditioning devices.

### BACKGROUND ART

An air conditioning system may conventionally include a plurality of air conditioning devices such as an indoor unit and a humidifying unit for conditioning of space states exemplified by temperature and humidity, as described in Patent Literature 1 (JP 2002-89942 A) and the like. Such an air conditioning system has a function of detecting and changing the space states through control of the plurality of air conditioning devices.

US 2016/373269 A1 discloses an air conditioning system comprising: a first air conditioning device provided for a predetermined space; and a second air conditioning device.

US 2015/053779 A1 discloses an air conditioning system comprising an air conditioning device which includes a detector configured to detect a state of a predetermined space for which the air conditioning device is provided for.

### SUMMARY OF THE INVENTION

### <Technical Problems>

In the air conditioning system described in Patent Literature 1, however, a user needs more time and effort to input for voice-control of the air conditioning devices, in comparison to control through input with use of buttons of a remote controller. If such an air conditioning system includes more air conditioning devices to be voice-controlled, voice tends to include more words because the air conditioning devices need to be voicespecified.

An air conditioning system including a plurality of air conditioning devices and configured to receive voice-input thus needs to be improved in user convenience.

### <Solutions to Problem>

An air conditioning system according to a first aspect of the invention is disclosed in claim 1.

The air conditioning system according to the first aspect of the invention is configured to select an option in order to cope with a direction even without any voice direction of a user for selecting. The air conditioning system achieves reduction in the number of words included in a voice message inputted to the input-output device for improvement in user convenience.

An air conditioning system according to a second aspect of the invention is disclosed in claim 2.

The selector in the air conditioning system according to the second aspect selects the option in accordance with the predetermined condition, so as to provide the user with useful information even with reduction in the number of words requested to be inputted by the user.

An air conditioning system according to a third aspect of the invention is disclosed in claim 3.

The air conditioning system according to the third aspect enables, by means of the setting unit, setting of the predetermined condition desired by the user.

An air conditioning system according to a fourth aspect of the invention is disclosed in claim 4.

An air conditioning system according to a fifth aspect of the invention is disclosed in claim 5.

The air conditioning system according to the fifth aspect selects in accordance with the device specifying information regardless of the predetermined condition, to achieve selection intended by the user for higher user satisfaction.

An air conditioning system according to a sixth aspect of the invention is disclosed in claim 6.

An air conditioning system according to a aspect of the invention is disclosed in claim 7.

### BRIEF DESCRIPTION OF THE DRAWINGS

FIG. 1 is a schematic diagram for explaining a configuration of an air conditioning system according to an embodiment of the invention.
FIG. 2 is a flowchart of exemplary operation of the air conditioning system.
FIG. 3 is a schematic diagram for explaining a configuration of an air conditioning system according to a modification example B.
FIG. 4 is a schematic diagram for explaining a configuration of an air conditioning system according to a modification example J.

### DESCRIPTION OF EMBODIMENTS

### (1) Entire configuration

An air conditioning system according to the present invention includes a first air conditioning device, a second air conditioning device, a selector, and a transmitter. An air conditioning device herein has a function of changing an air state in a target space. Examples of the air state in the space include temperature, humidity, a flow rate, and cleanliness of air. Examples of the air conditioning device include an air conditioner, a dehumidifier, a humidifier, a dehumidifier-humidifier, a floor heater, a radiator, and a circulator.

The first air conditioning device and the second air conditioning device are provided for an identical predetermined space. This embodiment exemplifies a first room RM1 to be described later as the predetermined space. The first air conditioning device includes a first detector configured to detect a state of the predetermined space, and the second air conditioning device includes a second detector configured to detect a state of the predetermined space. A state of the space herein conceptually includes a state of air in the space, as well as a state of a substance other than the air in the predetermined space. Examples of the state of the predetermined space also include presence of a person in the space and movement of a person in the space.

Voice operable input-output device herein is configured to operate a different device in accordance with a signal obtained by extracting a certain characteristic from voice. For example, the input-output device extracts characteristics "living room", "temperature", "tell" from a voice message "Please tell temperature in the living room". In this case, the input-output device provides the air conditioning system with information indicating a direction to cause a device constituting the air conditioning system to return an air state "temperature" detected by a detector (the first detector or the second detector) disposed in the "living room" as an installation site. An exemplary direction to return a detection result of the detector in the living room corresponds to a voice-inputted direction "Please tell temperature in the living room". The input-output device will be described later in terms of an exemplary specific configuration thereof.

The first detector is configured to output first detection information relevant to a voice direction inputted to the voice operable input-output device. The first detector optionally has the following two configurations so as to output the first detection information relevant to the voice-inputted direction. The air conditioning system has only to have one of the following two configurations. The first configuration is, in order to cope with the voice direction inputted to the input-output device, to cause the first detector to preliminarily detect and cause a storage device or the like to store the first detection information. When this configuration is adopted, the first detection information is read out of the storage device in accordance with the voice direction inputted to the input-output device and the air conditioning system outputs the first detection information preliminarily detected. The second configuration is, in order to cope with the voice direction inputted to the input-output device, to cause the first detector to detect in accordance with the direction thus inputted and output the first detection information. The above description of the first detector is also applicable to a case where the second detector is configured to output second detection information relevant to a voice direction inputted to the voice operable input-output device. The second detector will thus not be described herein. The following description of the embodiment of the invention refers to the first configuration, and modification examples will refer to the second configuration.

The selector acquires direction information indicating a direction to the input-output device. An exemplary direction "Please tell temperature in the living room" that is voice-inputted has voice-indicated direction contents. The direction information is a signal obtained by digitizing the voice-indicated direction contents so as to be processed by a device. This embodiment of the invention refers to the selector configured to select one of an option (a) of selecting the first detection information and an option (b) of selecting the second detection information in order to cope with a direction.

The transmitter transmits, to the input-output device, output information for output of the input-output device in accordance with the option selected by the selector. Specifically, when the selector selects the option (a), the transmitter outputs, to an input-output device, output information including the first detection information. When the selector selects the option (b), the transmitter outputs, to the input-output device, output information including the second detection information.

### (2) Input-output device

### (2-1) Voice input-output device

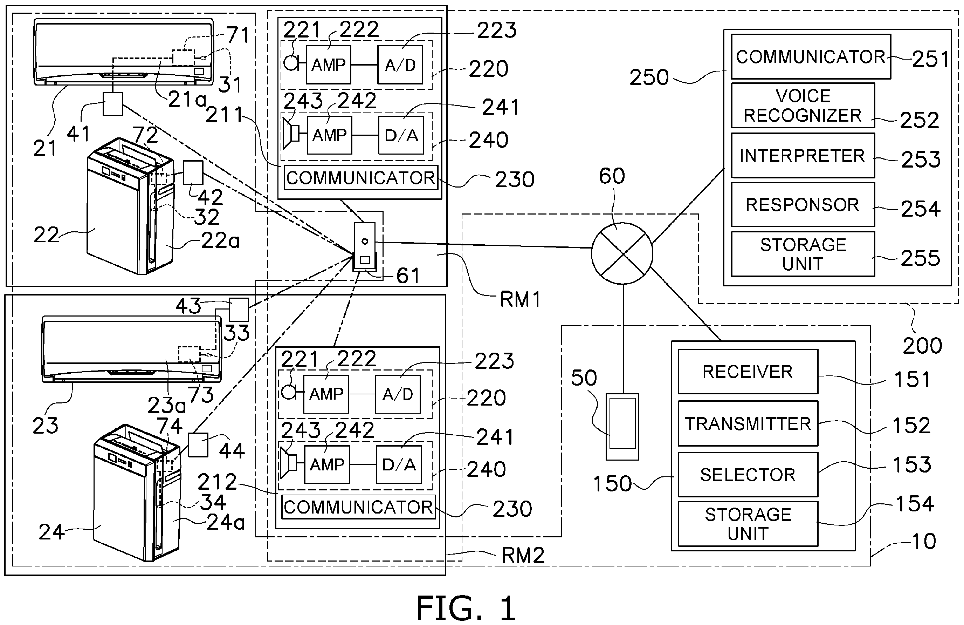

FIG. 1 depicts input-output device 200 including voice input-output devices 211 and 212, a router 61, and a second server 250. The router 61 is shared by the input-output device 200 and an air conditioning system 10. The input-output device 200 and the air conditioning system 10 can alternatively be connected to separate routers. The first room RM1 and a second room RM2 to be described later can be provided with different routers. The voice input-output device 211 is disposed in the first room RM1. The voice input-output device 212 is disposed in the second room RM2 partitioned from the first room RM1 so as to be voice-isolated.

The voice input-output devices 211 and 212 each include a voice input unit 220 and a sound output unit 240. The voice input-output devices 211 and 212 can be configured identically, and the following description is thus made to the configuration of the voice input-output device 211, without referring to the configuration of the voice input-output device 212.

The voice input unit 220 converts human voice to digital data and generates voice data to be transmitted and received via a network. The voice input unit 220 exemplarily includes a microphone 221, an amplifier 222, and an A-D converter 223. The microphone 221 converts human voice to an analog electric signal. The amplifier 222 amplifies the voice analog electric signal outputted from the microphone 221. The A-D converter 223 converts the analog electric signal outputted from the amplifier 222 to a digital signal. The digital signal outputted from the A-D converter 223 is voice data. This voice data is transmitted from a communicator 230 connected to the voice input unit 220. The voice data may be optionally processed for noise reduction, data compression, or the like.

The sound output unit 240 converts digital sound data received via a network to human catchable sound and outputs the converted sound. Such sound outputted from the sound output unit 240 includes voice. The sound outputted from the sound output unit 240 also includes alarm sound or the like in addition to the voice. The sound output unit 240 exemplarily includes a D-A converter 241, an amplifier 242, and a speaker 243. The D-A converter 241 receives, from the communicator 230, sound data received by the communicator 230, and converts the received sound data to an analog electric signal. The amplifier 242 amplifies the sound analog electric signal outputted from the D-A converter 241. The speaker 243 converts the analog electric signal amplified by the amplifier 242 to sound and outputs the sound.

The voice input-output devices 211 and 212 are connected to the router 61. The communicator 230 in each of the voice input-output devices 211 and 212 can be connected to a public line 60 via the router 61. The communicator 230 in each of the voice input-output devices 211 and 212 is configured to communicate with the second server 250 via the router 61 and the public line 60. The communicator 230 outputs, to the sound output unit 240, sound data transmitted from a communicator 251 or the like. The communicator 230 commands the sound output unit 240 to output from the speaker 243 in accordance with sound data "Temperature in the living room is 24°C" or the like.

Exemplified herein is the case where each of the voice input-output devices 211 and 212 and the second server 250 transmits and receives via the public line 60. The voice input-output devices 211 and 212 and the second server 250 can alternatively be configured to communicate without through the public line 60. For example, each of the voice input-output devices 211 and 212 and the second server 250 can be configured to communicate via a local area network. For example, the voice input-output devices 211 and 212 and the second server 250 (computer) can be connected via signal lines and be configured to communicate directly.

The voice input-output devices 211 and 212 each have at least one account for establishment of communication with the second server 250 or the like.

### (2-2) Second server 250

The second server 250 includes the communicator 251, a voice recognizer 252, an interpreter 253, a responsor 254, and a storage unit 255. The second server 250 exemplarily includes a CPU (not depicted) and a memory (not depicted). The communicator 251, the voice recognizer 252, the interpreter 253, the responsor 254, and the storage unit 255 are embodied by exemplarily causing the CPU to execute a program stored in the memory.

The communicator 251 is connected to the public line 60 and is configured to communicate with the voice input-output devices 211 and 212, a first server 150, and a smartphone 50. The second server 250 stores, in the storage unit 255, an account for communication with the voice input-output devices 211 and 212, the first server 150, and the smartphone 50. Exemplified herein is a case where a user makes, with use of a single account, communication between each of the voice input-output devices 211 and 212 and the second server 250, communication between the first server 150 and the second server 250, and communication between the smartphone 50 and the second server 250.

The communicator 251 in the second server 250 receives voice data from each of the voice input-output devices 211 and 212. The voice recognizer 252 receives the voice data from the communicator 251. The voice recognizer 252 has a voice recognizing function of converting voice data to text data. Text data is associated with a character code and can be converted to a character. The voice recognizer 252 can optionally be configured, by means of the voice recognizing function, to recognize a speaker of voice data. The interpreter 253 receives the text data from the voice recognizer 252. The interpreter 253 interprets, through syntax analysis or the like, contents described in the text data. In other words, the interpreter 253 comprehends a voice-inputted user direction. The interpreter 253 outputs direction information indicating direction contents.

Described herein is a case where the interpreter 253 is provided in the second server 250. The interpreter can alternatively be provided in the first server 150 in place of the second server 250.

The communicator 251 receives direction information from the interpreter 253. In this case, the communicator 251 acquires the account stored in the storage unit 255 and an ID associated with the account. Such an ID is a code for recognition of the user of the air conditioning system 10. The communicator 251 in the second server 250 and a receiver 151 and a transmitter 152 included in the first server 150 recognize each other by means of the account and the ID of the air conditioning system 10, and transmit and receive data each other via the public line 60. The communicator 251 transmits direction information to the receiver 151.

The communicator 251 in the second server 250 receives output information from the transmitter 152 in the first server 150. Output information indicates output contents of the input-output device 200. The communicator 251 outputs the output information to the responsor 254. The responsor 254 determines response contents in accordance with the output information. The responsor 254 determines the response contents with use of artificial intelligence or the like. For example, the responsor 254 causes the speaker 243 of the voice input-output device 211 to output a voice message "Temperature in the living room is 24°C". The responsor 254 has a voice synthesis function or the like, and generates sound data for the voice message "Temperature in the living room is 24°C". The responsor 254 outputs, to the communicator 251, a command to cause the sound output unit 240 to output sound according to the sound data. The communicator 251 transmits, to the voice input-output device 211 via the public line 60 and the router 61, the command and the sound data received from the responsor 254.

### (3) Air conditioning system 10

The air conditioning system 10 depicted in FIG. 1 includes air conditioners 21 and 23, air cleaners 22 and 24, the first server 150, the router 61, and the smartphone 50. The present embodiment of the invention relates to a case where the air conditioning system 10 includes the smartphone 50. However, the air conditioning system 10 may be constructed without including the smartphone 50.

### (3-1) Air conditioners 21 and 23 air cleaners 22 and 24

Herein, the air conditioner 21 corresponds to the first air conditioning device, the air cleaner 22 corresponds to the second air conditioning device, the air conditioner 23 corresponds to a third air conditioning device, and the air cleaner 24 corresponds to a fourth air conditioning device. The air conditioner 21 and the air cleaner 22 are provided for the first room RM1. The air conditioner 23 and the air cleaner 24 are provided for the second room RM2. The first room RM1 is exemplified by a living room, whereas the second room RM2 is exemplified by a bedroom. The first room RM1 exemplifies the predetermined space, and the second room RM2 exemplifies a space other than the predetermined space. Provision for the first room RM1 may include a case of setting at an appropriate site and influencing the first room RM1. For example, the air conditioner 21 provided for the first room RM1 may not be disposed in the first room RM1 and may be partially or entirely disposed outside the first room RM1.

Described herein is a case where the air conditioners 21 and 23 each have a cooling function, a heating function, a blowing function, a dehumidifying function, and a humidifying function, and the air cleaners 22 and 24 each have an air cleaning function, a blowing function, a dehumidifying function, and a humidifying function. In order for application of the technique according to the present invention, each of the air conditioners 21 and 23 and the air cleaners 22 and 24 may not have all the above functions but has only to have any of the functions for change of the air state in a corresponding one of the first room RM1 and the second room RM2. The air conditioner 21 includes, as the first detector, an indoor temperature sensor 31 configured to detect indoor temperature. The indoor temperature sensor 31 is disposed in a casing 21a of the air conditioner 21 adjacent to an inlet port (not depicted) of the air conditioner 21. The air cleaner 22 includes, as the second detector, an indoor temperature sensor 32 configured to detect indoor temperature. The indoor temperature sensor 32 is disposed in a casing 22a of the air cleaner 22 adjacent to an inlet port (not depicted) of the air cleaner 22. The air conditioner 23 includes, as a third detector, an indoor temperature sensor 33 configured to detect indoor temperature. The indoor temperature sensor 33 is disposed in a casing 23a of the air conditioner 23 adjacent to an inlet port (not depicted) of the air conditioner 23. The air cleaner 24 includes, as a fourth detector, an indoor temperature sensor 34 configured to detect indoor temperature. The indoor temperature sensor 34 is disposed in a casing 24a of the air cleaner 24 adjacent to an inlet port (not depicted) of the air cleaner 24.

The air conditioners 21 and 23 and the air cleaners 22 and 24 include controllers 71, 73, 72, and 74 and wireless LAN adapters 41 and 43, and wireless LAN adapters 42 and 44, respectively. Each of the controllers 71, 73, 72, and 74 in the air conditioners 21 and 23 and the air cleaners 22 and 24 exemplarily includes a CPU and a memory. The air conditioners 21 and 23 and the air cleaners 22 and 24 communicate with the router 61 with use of the wireless LAN adapters 41 to 44. The controllers 71, 73, 72, and 74 in the air conditioners 21 and 23 and the air cleaners 22 and 24 store an identical ID. The controllers 71, 73, 72, and 74 in the air conditioners 21 and 23 and the air cleaners 22 and 24 are configured to transmit, to the first server 150, indoor temperature values (first detection information, second detection information, third detection information, and fourth detection information) detected by the indoor temperature sensors 31, 32, 33, and 34 with use of the wireless LAN adapters 41 to 44 and the router 61.

For example, in the air conditioners 21 and 23 each connected to a commercial power source, the indoor temperature sensors 31 and 33 constantly detect indoor temperature (air temperature in the first room RM1 and air temperature in the second room RM2). Each of the air conditioners 21 and 23 periodically transmits, to the first server 150, the indoor temperature value detected by the indoor temperature sensor 31 or 33. Each of the air conditioners 21 and 23 transmits the indoor temperature value to the first server 150 every five minutes or the like.

The indoor temperature sensors 32 and 34 do not detect indoor temperature in these air cleaners 22 and 24 not in operation even when being each connected to a commercial power source. Each of the air cleaners 22 and 24 also periodically (e.g. every five minutes) transmits, to the first server 150, the indoor temperature value detected by the indoor temperature sensor 31 or 33. The air cleaners 22 and 24 being stopped to be not in operation transmit information indicating no detection of indoor temperature. In other words, the air cleaners 22 and 24 transmit, to the first server 150, indoor temperature values detected by the indoor temperature sensors 32 and 34 while being in operation, but do not transmit the indoor temperature values to the first server 150 while being stopped.

### (3-2) Router 61

The router 61 is a communication device connecting a local area network including the air conditioners 21 and 23, the air cleaners 22 and 24, and the voice input-output devices 211 and 212 and a network including the public line 60. The router 61 relays data between the local area network and the network including the public line 60.

### (3-3) First server 150

The first server 150 includes the receiver 151, the transmitter 152, a selector 153, and a storage unit 154. The first server 150 exemplarily includes a CPU (not depicted) and a memory (not depicted). The receiver 151, the transmitter 152, the selector 153, and the storage unit 154 are embodied by exemplarily causing the CPU to execute a program stored in the memory.

The receiver 151 periodically communicates with the router 61 and receives detection results of the indoor temperature sensors 31 to 34 transmitted from the router 61. The receiver 151 receives, via the public line 60, direction information transmitted from the communicator 251 in the second server 250. The receiver 151 and the transmitter 152 in the first server 150 and the communicator 251 in the second server 250 establish a communicable state with use of the account and the ID.

Direction information exemplarily includes contents "output, to the voice input-output device 211, detection information on a value of "temperature" with use of a detector of an air conditioning device disposed in the place called the "living room"". The receiver 151 thus received such direction information outputs the direction information to the selector 153.

The selector 153 acquires the direction information from the receiver 151. The selector 153 selects, in order to cope with a direction described in the direction information, the indoor temperature value detected by the indoor temperature sensor 31 or the indoor temperature value detected by the indoor temperature sensor 32. In other words, the selector 153 is configured to select one of the option (a) of selecting the indoor temperature value detected by the indoor temperature sensor 31 and the option (b) of selecting the indoor temperature value detected by the indoor temperature sensor 32. The selector 153 outputs the selected option to the transmitter 152. The selector 153 having selected the option (a) outputs, to the transmitter 152, information indicating selection of the indoor temperature value detected by the indoor temperature sensor 31.

The transmitter 152 transmits, to the input-output device 200, output information for output of the input-output device 200 in accordance with the option selected by the selector 153. In detail, the transmitter 152 reads, out of the storage unit 154, the indoor temperature value selected by the selector 153. Exemplarily described is a case where direction information is inputted to the selector 153 at 5:54 PM on October 29. The storage unit 154 is assumed to store, as an exemplary latest indoor temperature value of the first room RM1, an indoor temperature value (24°C) detected by the indoor temperature sensor 31 at 5:50 PM on October 29 and an indoor temperature value (23°C) detected by the indoor temperature sensor 32 at the same time. When the selector 153 selects the indoor temperature value detected by the indoor temperature sensor 31, the transmitter 152 in the first server 150 transmits, to the communicator 251 in the second server 250, in response to the direction information received by the receiver 151, the value 24°C as the latest indoor temperature value of the first room RM1. The second server 250 transmits, to the voice input-output device 211 disposed in the living room, a command to cause the voice input-output device 211 to output the indoor temperature 24°C along with sound data including synthesized voice. The command from the second server 250 includes notification of the indoor temperature 24°C received from the first server 150. The voice input-output device 211 having received the command from the second server 250 causes the sound output unit 240 to output the voice message "Temperature in the living room is 24°C" or the like.

The user can thus find the "temperature" in the "living room" by means of the voice message outputted from the voice input-output device 211, without a voice direction to a device configured to detect temperature upon provision of a voice direction to the voice input-output device 211 to tell "temperature" in the "living room".

### (3-3-1) Predetermined condition for selection

The selector 153 selects an option in accordance with a preset predetermined condition. The predetermined condition is set appropriately in accordance with the configuration of the air conditioning system 10. For example, the air conditioning system 10 depicted in FIG. 1 has a set condition of selecting the indoor temperature value detected by the indoor temperature sensor 31 in the air conditioner 21, which constantly detects indoor temperature. In other words, this predetermined condition is to follow a preliminarily inputted priority order. The preliminarily inputted priority order to prioritize the indoor temperature sensor 31 in the air conditioner 21 rather than the indoor temperature sensor 32 in the air cleaner 22 is stored in the storage unit 154 in the first server 150. The priority order is inputted by a service person responsible for construction upon, for example, construction of the air conditioning system 10. For selection, the selector 153 reads the predetermined condition out of the storage unit 154 upon selection.

### (3-3-2) Device specifying information for selection

In a case where direction information includes device specifying information, the air conditioning system can be configured to operate in accordance with the device specifying information. The device specifying information specifies at least one of the first air conditioning device and the second air conditioning device as a device to be relevant to a response to direction information.

The input-output device 200 depicted in FIG. 1 is configured to include device specifying information in direction information. Exemplarily described is a case where the user inputs, to the voice input-output device 211, a voice message "(Please) tell indoor temperature measured by the air cleaner in the living room". This voice message includes the words "air cleaner" as device specifying information. The voice input unit 220 converts the voice inputted to the voice input-output device 211 to voice data. The voice input-output device 211 transmits this voice data to the second server 250 via the router 61 and the public line 60. The second server 250 extracts device specifying information indicating that the user has specified the "air cleaner" as a device configured to detect an indoor temperature value through voice recognition by the voice recognizer 252 and interpretation by the interpreter 253, and transmits direction information including the device specifying information to the receiver 151 in the first server 150. The receiver 151 outputs the direction information including the device specifying information to the selector 153. As described in the section (3-3-1), described herein is a case where the priority order is set to prioritize the indoor temperature sensor 31 in the air conditioner 21 rather than the indoor temperature sensor 32 in the air cleaner 22. The selector 153 is configured to select in accordance with device specifying information regardless of the predetermined condition when the device specifying information is included in direction information, and thus selects the "air cleaner" regardless of the priority order.

The selector 153 having selected the air cleaner 22 in the living room in accordance with the device specifying information outputs, to the transmitter 152, information indicating selection of the indoor temperature value detected by the indoor temperature sensor 32 in the air cleaner 22. When the air cleaner 22 is in operation, the transmitter 152 reads, out of the storage unit 154, the indoor temperature value detected by the indoor temperature sensor 32 in the air cleaner 22.

The transmitter 152 may be configured variously depending on difference in responses to a case where the air cleaner 22 is not in operation. The transmitter 152 has the following two exemplary configurations. The first configuration is to operate the air cleaner 22 and cause the indoor temperature sensor 32 to detect indoor temperature in order to respond. The second configuration is to return a latest value out of indoor temperature values stored in the storage unit 154, without operating the air cleaner 22.

Description is made herein to the case where the air conditioning system 10 depicted in FIG. 1 has the first configuration. The transmitter 152 determines that the air cleaner 22 is not in operation in accordance with latest data indicating "indoor temperature is not detected by the indoor temperature sensor 32 in the air cleaner 22" stored in the storage unit 154. The transmitter 152 thus determined transmits an operation command to the air cleaner 22 via the public line 60, the router 61, and the wireless LAN adapter 42. The air cleaner 22 having received the operation command from the transmitter 152 starts operation. The air cleaner 22 transmits, to the first server 150 via the public line 60, the router 61, and the wireless LAN adapter 42, indoor temperature detected by the indoor temperature sensor 32 after elapse of predetermined time (e.g. one minute). The first server 150 newly acquired the indoor temperature detected by the indoor temperature sensor 32 transmits, to the second server 250, the value of the indoor temperature thus acquired as an indoor temperature value to be provided to the user.

When the air cleaner 22 is not connected to any power source, the air cleaner 22 does not transmit, to the first server 150, even information indicating that indoor temperature is not detected. The first server 150 can thus recognize that the air cleaner 22 is not connected to any power source. The air cleaner 22 cannot operate when the air cleaner 22 is not connected to any power source. The air conditioning system 10 can be configured to tell the user temperature detected by the indoor temperature sensor 31 in the air conditioner 21, or can be configured to provide the user with information indicating that indoor temperature detected at the air cleaner 22 cannot be notified because the air cleaner 22 is not connected to any power source.

### (4) Operation of air conditioning system 10 relevant to indoor temperature notification

Operation of the air conditioning system 10 relevant to indoor temperature notification already mentioned will be briefly described with reference to a flowchart.

The first server 150 in the air conditioning system 10 waits for reception of direction information (step S1). When the first server 150 receives direction information (Yes in step S2), the receiver 151 outputs the direction information to the selector 153. The selector 153 determines whether or not the direction information includes device specifying information (step S4).

When the direction information includes device specifying information (Yes in step S4), the selector 153 selects one of the indoor temperature values detected by the indoor temperature sensors 31 and 32 in accordance with the device specifying information (step S5). When the direction information does not include device specifying information (No in step S4), the selector 153 reads a priority order as predetermined information out of the storage unit 154 (step S6). The selector 153 selects one of the indoor temperature sensors 31 and 32 in accordance with the priority order (step S7). The selector 153 outputs information indicating a selection result to the transmitter 152 (step S8).

The transmitter 152 transmits, to the input-output device 200, output information for output of the input-output device 200 in accordance with an option selected by the selector 153 (step S9).

### (5) Modification examples

### (5-1) Modification example A

The above embodiment of the invention relates to the case where the selector 153 is configured, in order to cope with a direction, to select one of the option (a) of selecting the indoor temperature value detected by the indoor temperature sensor 31 as the first detection information and the option (b) of selecting the indoor temperature value detected by the indoor temperature sensor 32 as the second detection information.

The selector 153 can alternatively be configured to select any one of the option (a), the option (b), and an option (c) of selecting both the first detection information and the second detection information. The option (c) is exemplified by coping with the direction with use of an average value of the indoor temperature values detected by the indoor temperature sensors 31 and 32. The option (c) is alternatively exemplified by coping with the direction with use of a weighted average of the indoor temperature values detected by the indoor temperature sensors 31 and 32. The weighted average is appropriately set, and is exemplarily obtained by doubling the value of the device in operation. When the air cleaner 22 in operation has a detection value 22°C and the air conditioner 21 not in operation has a detection value 25°C, the weighted average is 23°C through calculation of (22 × 2 + 25) ÷ 3. The option (c) is still alternatively exemplified by coping with the direction with use of a function f(x1, x2) including, as variables x1 and x2, the indoor temperature values detected by the indoor temperature sensors 31 and 32.

When the selector 153 transmits selection of the option (c) to the transmitter 152, the transmitter 152 reads the indoor temperature values detected by the indoor temperature sensors 31 and 32 out of the storage unit 154. The transmitter 152 calculates, from the indoor temperature values detected by the indoor temperature sensors 31 and 32, an indoor temperature value to be included in output information to be transmitted to the input-output device 200.

### (5-2) Modification example B

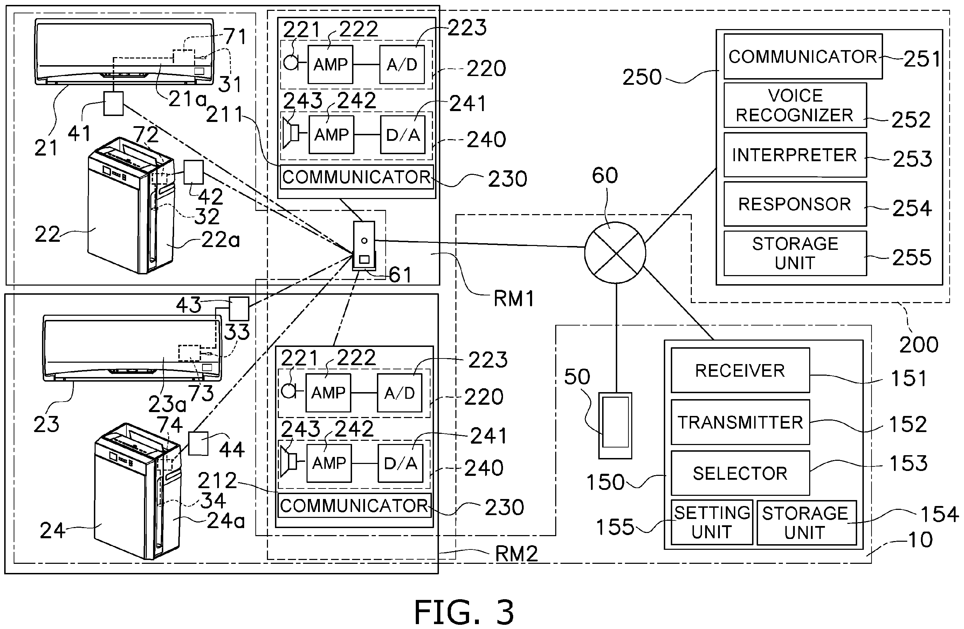

The above embodiment of the invention relates to the case where a set condition is preliminarily stored in the storage unit 154 and is not changed halfway. The air conditioning system 10 can alternatively include a setting unit 155 depicted in FIG. 3. When the setting unit 155 receives data describing a predetermined condition, the setting unit 155 sets the predetermined condition. For example, the user transmits, from the smartphone 50 to the first server 150 via the public line 60, the data describing the predetermined condition. The smartphone 50 stores an ID and is configured to transmit to and receive from the first server 150 with use of the ID.

A receiver 151 having received the data describing the predetermined condition outputs the data describing the predetermined condition to the setting unit 155. The setting unit 155 sets the predetermined condition in accordance with the data describing the predetermined condition. For example, the setting unit 155 changes a predetermined condition stored in the storage unit 154 in accordance with the data describing the predetermined condition and transmitted from the smartphone 50.

The above embodiment of the invention relates to the case where the storage unit 154 stores the priority order as a predetermined condition. In such a case, the storage unit 154 is assumed to store an exemplary condition of preferentially selecting the indoor temperature value detected by the indoor temperature sensor 31 in the air conditioner 21 rather than the indoor temperature value detected by the indoor temperature sensor 32 in the air cleaner 22. The user can cause the setting unit 155 to change this priority order and set prioritization of the indoor temperature value detected by the indoor temperature sensor 32 in the air cleaner 22 rather than the indoor temperature value detected by the indoor temperature sensor 31 in the air conditioner 21.

The user can cause the setting unit 155 to change setting so as to operate under a condition of following the preliminarily inputted priority order when both the air conditioner 21 and the air cleaner 22 are in operation, and operate under a condition of selecting the indoor temperature value detected by the indoor temperature sensor 31 when only the air conditioner 21 is in operation or selecting the indoor temperature value detected by the indoor temperature sensor 32 when only the air cleaner 22 is in operation.

The user can cause the setting unit 155 to change the condition of following the preliminarily inputted priority order to a condition of selecting in accordance with the state of the predetermined space. For example, the air conditioner 21 may include a human detection sensor configured to detect whether or not there is any human in the first room RM1. The air conditioner 21 periodically (e.g. every five minutes) transmits, to the first server 150, a detection result of the human detection sensor. The storage unit 154 stores the detection result of the human detection sensor received by the first server 150. The predetermined condition can be exemplarily set to have a condition of selecting the indoor temperature value detected by the indoor temperature sensor 32 in the air cleaner 22 when there is any human in the first room RM1 serving as the predetermined space, and selecting the indoor temperature value detected by the indoor temperature sensor 31 in the air conditioner 21 when there is no human in the first room RM1. Such a predetermined condition exemplifies the condition of selecting in accordance with the state of the predetermined space. The selector 153 is configured to read, out of the storage unit 154, the detection result of the human detection sensor and the predetermined condition of selecting in accordance with the detection result of the human detection sensor (the state of the predetermined space) stored in the storage unit 154, to select in accordance with the predetermined condition.

The condition of selecting in accordance with the state of the predetermined space is alternatively exemplified as follows. For example, at least one of the air conditioner 21 and the air cleaner 22 may include a humidity sensor. The air conditioner 21 and/or the air cleaner 22 periodically (e.g. every five minutes) transmits, to the first server 150, a detection result of the humidity sensor. The storage unit 154 stores the detection result of the humidity sensor received by the first server 150. The predetermined condition can be exemplarily set to have a condition of selecting the indoor temperature value detected by the indoor temperature sensor 32 in the air cleaner 22 when the first room RM1 serving as the predetermined space has humidity equal to or more than 50%, and selecting the indoor temperature value detected by the indoor temperature sensor 31 in the air conditioner 21 when the first room RM1 has humidity less than 50%. The selector 153 is configured to read, out of the storage unit 154, the detection result of the humidity sensor and the predetermined condition of selecting in accordance with the detection result of the humidity sensor (the state of the predetermined space) stored in the storage unit 154, to select in accordance with the predetermined condition.

### (5-3) Modification example C

The above embodiment of the invention relates to the case where the first detector corresponds to the indoor temperature sensor 31 in the air conditioner 21 and the second detector corresponds to the indoor temperature sensor 32 in the air cleaner 22. However, the first detector and the second detector are not limited to such temperature sensors. The air conditioning system 10 can exemplarily include the first detector functioning as a humidity sensor in the air conditioner 21 and the second detector functioning as a humidity sensor in the air cleaner 22. Alternatively, the air conditioning system 10 can exemplarily include the first detector functioning as the human detection sensor in the air conditioner 21 and the second detector functioning as the human detection sensor in the air cleaner 22. Still alternatively, the air conditioning system 10 can exemplarily include the first detector functioning as a dust detection sensor included in the air conditioner 21 and configured to detect dust, and the second detector functioning as a dust detection sensor included in the air cleaner 22.

### (5-4) Modification example D

The above embodiment of the invention relates to the case where the voice input-output device 211 is provided separately from the air conditioner 21 and the air cleaner 22. The voice input-output device 211 may alternatively be incorporated in the air conditioner 21 or the air cleaner 22. Still alternatively, part of constituent elements of the voice input-output device 211 may be incorporated in at least one of the air conditioner 21 and the air cleaner 22. For example, the sound output unit 240 may be incorporated in the air conditioner 21 or the air cleaner 22. For example, the voice input unit 220 may be incorporated in the air conditioner21 or the air cleaner 22. When the voice input unit 220 is incorporated in the air conditioner 21 or the air cleaner 22, the controller 71 or 72 and the wireless LAN adapter 41 or 42 in the air conditioner 21 or the air cleaner 22 function as the communicator 230. The voice input-output device 211 may alternatively be integrated with any other home appliance disposed in the first room RM1.

The voice input-output device 211 may still alternatively be incorporated in the smartphone 50. When the voice input-output device 211 is incorporated in the smartphone 50, temperature notification according to a voice direction by the user may be made with use of a speaker of the smartphone 50 or with use of a touch screen of the smartphone 50. In response to the temperature notification according to the voice direction by the user, the smartphone 50 may be exemplarily configured to display "temperature in the living room is 24°C" on the touch screen. Such a case of displaying "temperature in the living room is 24°C" on the touch screen also corresponds to the case where the transmitter 152 transmits, to the input-output device 200, output information for output of the input-output device 200 in accordance with an option selected by the selector 153. In this case, the second server 250 having received the output information from the transmitter 152 transmits, to the smartphone 50, text data indicating "temperature in the living room is 24°C". The air conditioning system 10 may alternatively be configured to transmit, to the smartphone 50, sound data "temperature in the living room is 24°C" along with this text data.

### (5-5) Modification example E

The above embodiment of the invention relates to the case where functional blocks of the first server 150 and functional blocks of the second server are each embodied by causing the CPU to interpret and execute the executable program and data stored in the memory. The above embodiment of the invention also relates to the case where the controllers 71, 73, 72 and 74 in the air conditioners 21 and 23 and the air cleaners 22 and 24 execute control through causing the CPU to interpret and execute the executable program and data stored in the memory. Alternatively, the program and the data may be introduced into the memory via a recording medium, or may be directly executed on the recording medium. Still alternatively, the program and data may be introduced from the recording medium into the memory via a telephone line, a conveyance path, or the like. In some embodiments of the invention, the functional blocks may be each constituted by an integrated circuit (IC) configured to achieve a function similar to that achieved with use of the CPU and the memory. In some embodiments of the invention, the controllers 71, 73, 72, and 74 in the air conditioners 21 and 23 and the air cleaners 22 and 24 may be each constituted by an integrated circuit (IC) configured to execute control similar to that executed with use of the CPU and the memory. Examples of the IC mentioned herein include a large-scale integrated circuit (LSI), an application-specific integrated circuit (ASIC), a gate array, a field programmable gate array (FPGA), and the like.

### (5-6) Modification example F

The above embodiment of the invention relates to the case where the air conditioner 21 as the first air conditioning device and the air cleaner 22 as the second air conditioning device are provided for the first room RM1 as the single predetermined space. Air conditioning devices provided in the single predetermined space are not limited to these two devices of the first air conditioning device and the second air conditioning device. For example, the first room RM1 may be provided therein with a dehumidifier configured to detect indoor temperature as an additional air conditioning device. The dehumidifier provided in the first room RM1 includes an indoor temperature sensor, a controller, and a wireless LAN adapter. The dehumidifier periodically transmits an indoor temperature value to the first server 150 via the wireless LAN adapter, the router 61, and the public line 60. The first server 150 stores in the storage unit 154 the indoor temperature value transmitted from the dehumidifier. In such a configuration, upon provision of a user direction "tell temperature in the living room", the selector 153 automatically selects any one of the indoor temperature value detected by the indoor temperature sensor 31 in the air conditioner 21, the indoor temperature value detected by the indoor temperature sensor 32 in the air cleaner 22, and the indoor temperature value detected by the indoor temperature sensor in the dehumidifier, in accordance with the predetermined condition without any voice direction of words for device selection. The selector 153 can be configured to automatically select one of similar detection information pieces even in a case where four or more air conditioning devices are provided in an identical predetermined space or even in a similar case with no voice direction of words for device selection.

### (5-7) Modification example G

Operation similar to operation, as described in the above embodiment of the invention, of a system including the air conditioner 21 as the first air conditioning device, the air cleaner 22 as the second air conditioning device, and the selector 153 and the transmitter 152 in the first server 150 can be executed by a system including the air conditioner 23 as the third air conditioning device, the air cleaner 24 as the fourth air conditioning device, and the selector 153 and the transmitter 152 in the first server 150.

Assume an exemplarily case where the user directs the voice input-output device 212 provided in the second room RM2 or incorporated in the smartphone 50 to "tell temperature in the bedroom". In this case, the voice input-output device 212 transmits voice data "tell temperature in the bedroom" to the second server 250.

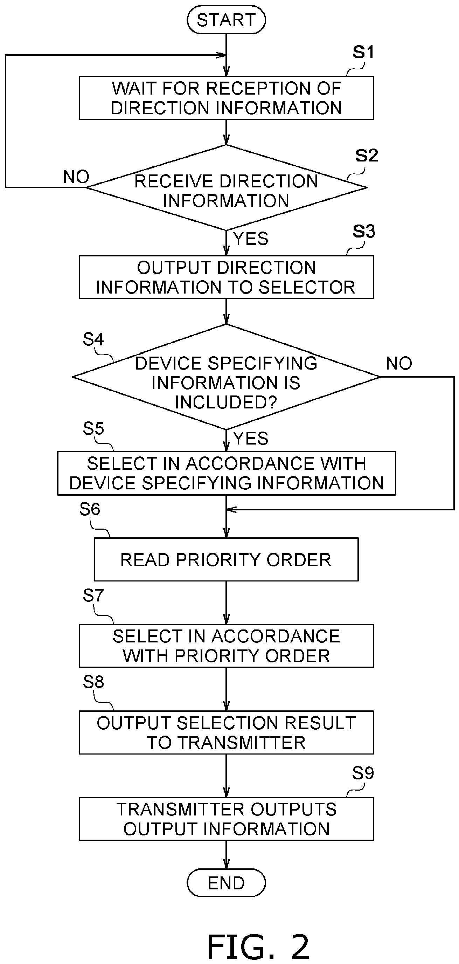

Operation of the air conditioning system 10 having received direction information from the second server 250 will be described as follows with reference to FIG. 2. For example, the first server 150 receives direction information indicating "notify temperature in the bedroom" (Yes in step S2), and the receiver 151 outputs the direction information to the selector 153. The selector 153 determines whether or not the direction information includes device specifying information (step S4).

Because this direction information does not include device specifying information (No in step S4), the selector 153 reads a priority order as predetermined information out of the storage unit 154 (step S6). According to the priority order read out of the storage unit 154, the indoor temperature value detected by the indoor temperature sensor 33 in the air conditioner 23 is prioritized rather than the indoor temperature value detected by the indoor temperature sensor 34 in the air cleaner 24. The selector 153 selects the indoor temperature value detected by the indoor temperature sensor 33 in accordance with the priority order (step S7). The selector 153 outputs information indicating a selection result to the transmitter 152 (step S8). The transmitter 152 transmits, to the input-output device 200, output information for output of the input-output device 200 in accordance with an option selected by the selector 153 (step S9). The input-output device 200 transmits, to the voice input-output device 212 provided in the second room RM2 or the voice input-output device 212 incorporated in the smartphone 50, sound data "temperature in the bedroom is 22°C" or the like.

### (5-8) Modification example H

The above embodiment of the invention assumes the first room RM1 as the predetermined space The predetermined space may alternatively be assumed as a house including the first room RM1 and the second room RM2. When such a house corresponds to the predetermined space, for example, the air conditioner 21 can correspond to the first air conditioning device and the air conditioner 23 can correspond to the second air conditioning device. Assume an exemplarily case where the user asks the voice input-output device 211 provided in the first room RM1, the voice input-output device 212 provided in the first room RM1, or the smartphone 50 incorporating a voice input-output device "What is the temperature in the house?" or the like.

Operation of the air conditioning system 10 having received direction information from the second server 250 will be described as follows with reference to FIG. 2. For example, the first server 150 receives direction information indicating "notify temperature in the house" (Yes in step S2), and the receiver 151 outputs the direction information to the selector 153. The selector 153 determines whether or not the direction information includes device specifying information (step S4).

Because this direction information does not include device specifying information (No in step S4), the selector 153 reads a priority order as predetermined information out of the storage unit 154 (step S6). According to the priority order read out of the storage unit 154, the indoor temperature value detected by the indoor temperature sensor 31 in the air conditioner 21 in the living room is assumed to be prioritized rather than the indoor temperature value detected by the indoor temperature sensor 33 in the air conditioner 23 in the bedroom. The selector 153 selects the indoor temperature value detected by the indoor temperature sensor 31 in accordance with the priority order (step S7). The selector 153 outputs information indicating a selection result to the transmitter 152 (step S8). The transmitter 152 transmits, to the input-output device 200, output information for output of the input-output device 200 in accordance with an option selected by the selector 153 (step S9). The input-output device 200 returns, to one having received the direction among the voice input-output devices 211 and 212 and the smartphone 50, sound data "temperature in the house is 26°C" or the like.

The predetermined condition can be exemplarily set to include a condition of prioritizing the indoor temperature value detected by the indoor temperature sensor 31 in the air conditioner 21 when the user asks from 8:00 AM to 8:00 PM and prioritizing the indoor temperature value detected by the indoor temperature sensor 33 in the air conditioner 23 when the user asks from 8:01 PM to 7:59 AM. The predetermined condition thus set enables notification of temperature in the living room more frequently used relatively during daytime at appropriate timing without designation of any place in the house, and notification of temperature in the bedroom more frequently used relatively during nighttime at appropriate timing without designation of any place in the house.

### (5-9) Modification example I

The embodiment of the invention and the modification examples described above refer to an exemplary case of simply providing "temperature in the living room is 24°C" in response to the direction "tell temperature in the living room", without including information for specification of a device having executed detection. The air conditioning system 10 may alternatively be configured to include information on the device having executed detection in a response such as "temperature in the living room detected by the air conditioner is 24°C". In such a case, the first server 150 may be exemplarily configured to transmit, to the second server 250, the information on the device having executed detection. The second server 250 is configured to add, to a response, the device information transmitted from the first server 150.

### (5-10) Modification example J

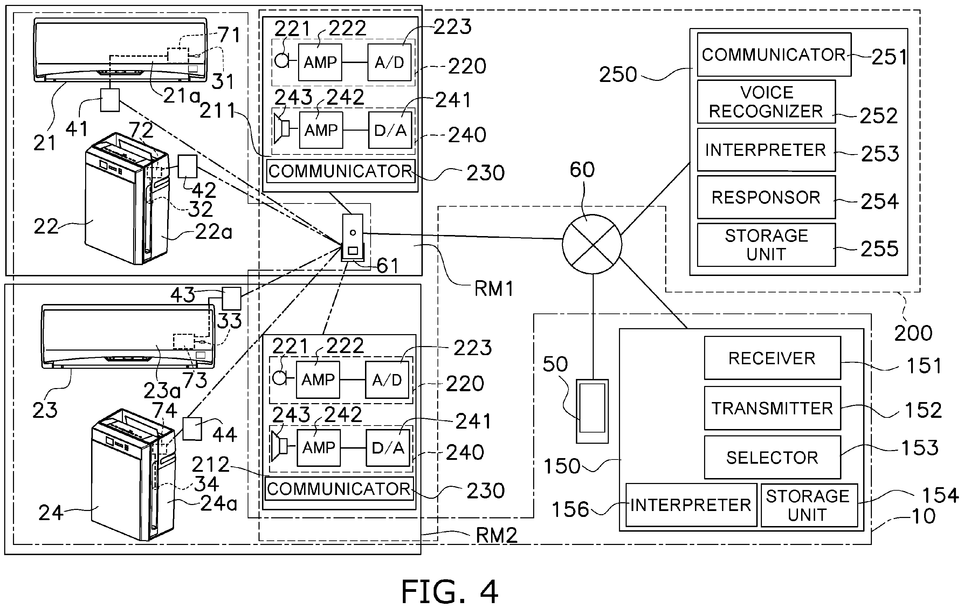

As mentioned in the description of the above embodiment of the invention, the first server 150 may alternatively include an interpreter 156 as depicted in FIG. 4. The interpreter 156 in the first server 150 functions similarly to the interpreter 253 in the second server 250 already described. The second server 250 may include the interpreter 253 when the first server 150 includes the interpreter 156.

### (5-11) Modification example K

The above embodiment of the invention relates to the case where the input-output device 200 is configured to input and output voice and sound. The input-output device 200 may alternatively be configured to respond by means of display along with input and output of voice and sound. In order to achieve such a configuration, each of the voice input-output devices 211 and 212 exemplarily includes a liquid crystal display device (not depicted). In response to temperature notification according to a voice direction by the user, the voice input-output device 211 may be exemplarily configured to display "temperature in the living room is 24°C" on the liquid crystal display device. Such a case of displaying "temperature in the living room is 24°C" on the liquid crystal display device also corresponds to the case where the transmitter 152 transmits, to the input-output device 200, output information for output of the input-output device 200 in accordance with an option selected by the selector 153. In this case, the second server 250 having received the output information from the transmitter 152 transmits, to the voice input-output device 211, text data indicating "temperature in the living room is 24°C".

The air conditioning system 10 may alternatively be configured to transmit, to the voice input-output device 211, sound data indicating "temperature in the living room is 24°C" along with this text data. In this case, the communicator 230 in the voice input-output device 211 receives the sound data and the text data indicating "temperature in the living room is 24°C". The communicator 230 causes the sound output unit 240 to output voice, as well as causes the liquid crystal display device to display the response.

### (6) Characteristics

(6-1)
The air conditioning system 10 according to each of the embodiment of the invention and the modification examples described above is configured to cause the selector 153 to select an option in order to cope with a direction even without any voice direction of the user for selecting. The air conditioning system 10 achieves reduction in the number of words included in a voice message inputted to input-output device 200 for improvement in user convenience. For example, inputting "tell temperature in the living room" to the voice input-output device 211 in the input-output device 200 is shorter than inputting "tell temperature in the living room detected by the air conditioner" with deletion of the phrase "detected by the air conditioner". In this manner, the air conditioning system 10 achieves reduction in the number of words included in a voice message inputted by the user.

(6-2)
The selector 153 selects in accordance with the predetermined condition, so as to facilitate provision to the user of useful information even with reduction in the number of words requested to be inputted by the user. For example, temperature of circulating air can be detected when the predetermined condition includes a condition of prioritizing information on indoor temperature of an air conditioning device in operation. Temperature of circulating air is often more useful than temperature of dead air as information on indoor temperature. Such appropriate setting of the predetermined condition leads to provision of useful information for the user.

(6-3)
When the first server 150 includes the setting unit 155 as depicted in FIG. 3, the air conditioning system 10 enables, by means of the setting unit 155, setting of the predetermined condition desired by the user. When the user is not satisfied with the preliminarily set predetermined condition, the user can set an own preferred predetermined condition with use of the setting unit 155, for higher user satisfaction.

(6-4)
When the selector 153 in the air conditioning system 10 is configured to select in accordance with device specifying information regardless of the predetermined condition, selection is made as intended by the user for higher user satisfaction. Assume exemplarily that the predetermined condition is set to preferentially notify of indoor temperature detected by the indoor temperature sensor 31 in the air conditioner 21 as described in the above embodiment of the invention. If the user desires notification of indoor temperature detected by the indoor temperature sensor 32 in the air cleaner 22, this user will be constantly unsatisfied. The user, who is more satisfied with providing a direction "tell temperature in the living room detected by the air cleaner" rather than being notified under the preliminarily set predetermined condition, has higher satisfaction with input of device specifying information rather than the predetermined condition, even though the number of words increases due to the input of the device specifying information.

(6-5)
Direction information such as "notify temperature in the living room" mentioned in the above embodiment of the invention corresponds to request information for requesting notification of a space environment of space temperature. The selector 153 selects in accordance with the request information because the indoor temperature sensor 31 as the first detector and the indoor temperature sensor 32 as the second detector are each configured to detect the space environment. The transmitter 152 outputs output information in accordance with selection by the selector 153.

### REFERENCE SIGNS LIST

10: Air conditioning system
21: Air conditioner (exemplifying first air conditioning device)
22: Air cleaner (exemplifying second air conditioning device)
31: Indoor temperature sensor (exemplifying first detector)
32: Indoor temperature sensor (exemplifying second detector)
152: Transmitter
153: Selector
155: Setting unit
200: Input-output device

### CITATION LIST

### PATENT LITERATURE

Patent Literature 1: JP 2002-89942 A

## Claims

1. An air conditioning system (10) comprising:
a first air conditioning device (21) provided for a predetermined space; and
a second air conditioning device (22),
**characterized in that**:
the first air conditioning device includes a first detector (31) configured to detect a state of the predetermined space, the first air conditioning device being capable of outputting first detection information detected by the first detector, the first detection information being pertinent to the state of the predetermined space and relevant to a voice direction inputted to a voice operable input-output device (200); and
the second air conditioning device is provided for the predetermined space and includes a second detector (32) configured to detect a state of the predetermined space, the second air conditioning device being capable of outputting second detection information detected by the second detector, the second detection information being pertinent to the state of the predetermined space and relevant to the voice direction inputted to the input-output device; wherein
the air conditioning system further comprises:
a selector (153) configured to acquire direction information indicating the direction, and select, in order to cope with the direction, at least one of the first detection information and the second detection information; and
a transmitter (152) configured to transmit, to the input-output device, output information for output of the input-output device in accordance with the information selected by the selector.

2. The air conditioning system (10) according to claim 1, wherein
the selector is configured to select either one of the first detection information and the second detection information in accordance with a predetermined condition set preliminarily, or select at least one of the first detection information and the second detection information in accordance with the predetermined condition set preliminarily.

3. The air conditioning system (10) according to claim 2, further comprising a setting unit (155) configured to set the predetermined condition.

4. The air conditioning system (10) according to claim 2 or 3, wherein
the predetermined condition includes at least one of
a condition of selecting the first detection information when only the first air conditioning device is in operation, and selecting the second detection information when only the second air conditioning device is in operation,
a condition of following a priority order inputted preliminarily, and
a condition of selecting in accordance with the state of the predetermined space.

5. The air conditioning system (10) according to any one of claims 2 to 4, wherein
when the direction information includes device specifying information specifying at least one of the first air conditioning device and the second air conditioning device as a device to be relevant to a response to the direction information, the selector is configured to select in accordance with the device specifying information regardless of the predetermined condition.

6. The air conditioning system (10) according to any one of claims 1 to 5, wherein
the direction information corresponds to request information for requesting notification of a space environment,
the selector is configured to select to cope with the request information when the first detector and the second detector are capable of detecting the space environment, and
the transmitter is configured to output the output information in accordance with selection by the selector.

7. The air conditioning system (10) according to any one of claims 1 to 6, wherein
the selector is configured to select only one of the first detection information and the second detection information as information to be relevant to a response to the direction information.

## Patentansprüche

1. Klimatisierungssystem (10), das aufweist:
eine erste Klimatisierungsvorrichtung (21), die für einen vorbestimmten Raum vorgesehen ist; und
eine zweite Klimatisierungsvorrichtung (22),
**dadurch gekennzeichnet, dass**:
die erste Klimatisierungsvorrichtung einen ersten Detektor (31) aufweist, der konfiguriert ist, einen Zustand des vorbestimmten Raums zu erfassen, wobei die erste Klimatisierungsvorrichtung imstande ist, erste Erfassungsinformationen auszugeben, die von dem ersten Detektor erfasst werden, wobei die ersten Erfassungsinformationen zum Zustand des vorbestimmten Raums gehören und für eine Sprachrichtung relevant sind, die in eine sprachbedienbare Eingabe-Ausgabe-Vorrichtung (200) eingegeben wird; und
die zweite Klimatisierungsvorrichtung für den vorbestimmten Raum vorgesehen ist und einen zweiten Detektor (32) aufweist, der konfiguriert ist, einen Zustand des vorbestimmten Raums zu erfassen, wobei die zweite Klimatisierungsvorrichtung imstande ist, zweite Erfassungsinformationen auszugeben, die vom zweiten Detektor erfasst werden, wobei die zweiten Erfassungsinformationen zum Zustand des vorbestimmten Raums gehören und für die Sprachrichtung relevant sind, die in die Eingabe-Ausgabe-Vorrichtung eingegeben wird; wobei
das Klimatisierungssystem ferner aufweist:
einen Selektor (153), der konfiguriert ist,
Richtungsinformationen zu erfassen, die die Richtung angeben, und, um der Richtung gerecht zu werden, die ersten Erfassungsinformationen und/oder die zweiten Erfassungsinformationen auszuwählen; und
einen Sender (152), der konfiguriert ist, an die Eingabe-Ausgabe-Vorrichtung Ausgabeinformationen für die Ausgabe der Eingabe-Ausgabe-Vorrichtung gemäß den durch den Selektor ausgewählten Informationen zu übertragen.

2. Klimatisierungssystem (10) nach Anspruch 1, wobei der Selektor konfiguriert ist, entweder die ersten Erfassungsinformationen oder die zweiten Erfassungsinformationen gemäß einer vorher festgelegten Bedingung auszuwählen oder die ersten Erfassungsinformationen und/oder die zweiten Erfassungsinformationen gemäß der vorher festgelegten Bedingung auszuwählen.

3. Klimatisierungssystem (10) nach Anspruch 2, das ferner aufweist:
eine Einstelleinheit (155), die konfiguriert ist, die vorbestimmte Bedingung einzustellen.

4. Klimatisierungssystem (10) nach Anspruch 2 oder 3, wobei die vorbestimmte Bedingung mindestens eine aufweist von:
einer Bedingung, die ersten Erfassungsinformationen auszuwählen, wenn nur die erste Klimatisierungsvorrichtung in Betrieb ist, die zweiten Erfassungsinformationen auszuwählen, wenn nur die zweite Klimatisierungsvorrichtung in Betrieb ist,
einer Bedingung, einer vorher eingegebenen Prioritätsreihenfolge zu folgen, und
einer Bedingung, gemäß dem Zustand des vorbestimmten Raums auszuwählen.

5. Klimatisierungssystem (10) nach einem der Ansprüche 2 bis 4, wobei, wenn die Richtungsinformationen gerätespezifizierende Informationen enthalten, die mindestens eine der ersten Klimatisierungsvorrichtung und der zweiten Klimatisierungsvorrichtung als eine Vorrichtung spezifizieren, das für eine Antwort auf die Richtungsinformationen relevant sein soll, der Selektor konfiguriert ist, gemäß den gerätespezifizierenden Informationen unabhängig vom vorbestimmten Zustand auszuwählen.

6. Klimatisierungssystem (10) nach einem der Ansprüche 1 bis 5, wobei die Richtungsinformationen Anforderungsinformationen zum Anfordern einer Benachrichtigung über eine Raumumgebung entsprechen,
der Selektor konfiguriert ist, so auszuwählen, dass er den Anforderungsinformationen gerecht wird, wenn der erste Detektor und der zweite Detektor imstande sind, die Raumumgebung zu erfassen, und
der Sender konfiguriert ist, die Ausgabeinformationen entsprechend der Auswahl durch den Selektor auszugeben.

7. Klimatisierungssystem (10) nach einem der Ansprüche 1 bis 6, wobei der Selektor konfiguriert ist, nur die ersten Erfassungsinformationen oder die zweiten Erfassungsinformationen als für eine Antwort auf die Richtungsinformationen relevante Informationen auszuwählen.

## Revendications

1. Système de climatisation (10), comprenant :
un premier dispositif de climatisation (21) prévu pour un espace prédéfini ; et
un deuxième dispositif de climatisation (22),
**caractérisé en ce que** :
le premier dispositif de climatisation comprend un premier détecteur (31) prévu pour détecter un état de l'espace prédéfini, ledit premier dispositif de climatisation étant apte à émettre des premières informations de détection détectées par le premier détecteur, lesdites premières informations de détection étant relatives à l'état de l'espace prédéfini et relatives à une direction vocale entrée dans un dispositif d'entrée-sortie à actionnement vocal (200) ; et
le deuxième dispositif de climatisation est prévu pour l'espace prédéfini et comprend un deuxième détecteur (32) prévu pour détecter un état de l'espace prédéfini, ledit deuxième dispositif de climatisation étant apte à émettre des deuxièmes informations de détection détectées par le deuxième détecteur, lesdites deuxièmes informations de détection étant relatives à l'état de l'espace prédéfini et relatives à la direction vocale entrée dans le dispositif d'entrée-sortie ; où
ledit système de climatisation comprend en outre :
un sélecteur (153) prévu pour acquérir des informations de direction indiquant la direction, et sélectionner, pour s'adapter à la direction, les premières informations de détection et/ou les deuxièmes informations de détection ; et
un transmetteur (152) prévu pour transmettre au dispositif d'entrée-sortie, des informations de sortie pour une sortie du dispositif d'entrée-sortie en fonction des informations sélectionnées par le sélecteur.

2. Système de climatisation (10) selon la revendication 1, où le sélecteur est prévu pour sélectionner les premières informations de détection ou les deuxièmes informations de détection en fonction d'une condition prédéfinie préalablement fixée, ou sélectionner les premières informations de détection et/ou les deuxièmes informations de détection en fonction de la condition prédéfinie préalablement fixée.

3. Système de climatisation (10) selon la revendication 2, comprenant en outre
une unité de configuration (155) prévue pour configurer la condition prédéfinie.

4. Système de climatisation (10) selon la revendication 2 ou la revendication 3, où la condition prédéfinie comprend une condition de sélection des premières informations de détection quand seul le premier dispositif de climatisation est en cours de fonctionnement, et de sélection des deuxièmes informations de détection quand seul le deuxième dispositif de climatisation est en cours de fonctionnement, une condition de suivi d'un ordre de priorité entré au préalable, et
une condition de sélection en fonction de l'état de l'espace prédéfini.

5. Système de climatisation (10) selon l'une des revendications 2 à 4, où, si les informations de direction comprennent des informations de spécification de dispositif spécifiant le premier dispositif de climatisation et/ou le deuxième dispositif de climatisation en tant que dispositifs pertinents pour une réponse aux informations de direction, le sélecteur est prévu pour sélectionner en fonction des informations de spécification de dispositif sans tenir compte de la condition prédéfinie.

6. Système de climatisation (10) selon l'une des revendications 1 à 5, où les informations de direction correspondent à des informations de demande pour demander notification d'un environnement spatial,
le sélecteur est prévu pour sélectionner une adaptation aux informations de demande si le premier détecteur et le deuxième détecteur sont aptes à détecter l'environnement spatial, et
le transmetteur est prévu pour transmettre les informations de sortie en fonction de la sélection par le sélecteur.

7. Système de climatisation (10) selon l'une des revendications 1 à 6, où le sélecteur est prévu pour ne sélectionner que les premières informations de détection ou que les deuxièmes informations de détection en tant qu'informations pertinentes pour une réponse aux informations de direction.
